# FASCICULE DE BREVET EUROPEEN

(11) **EP 0 607 356 B1**
(45) Date de publication et mention de la délivrance du brevet: **05.03.1997**
(21) Numéro de dépôt: 92922838.5
(22) Date de dépôt: 09.10.1992
(51) Int. Cl.: B62M 9/08

(54) **PLATEAU NON CIRCULAIRE POUR PEDALIER**
ZAHNRAD, NICHTRUND, FÜR KURBELANTRIEBE
NON-CIRCULAR FRONT CHAIN WHEEL FOR CRANK GEAR

(30) Priorité: 11.10.1991 FR 9112845
(43) Date de publication de la demande: 27.07.1994
(73) Titulaire: SASSI, Michel, F-06540 Breil-sur-Roya (FR); TALO, Jean-Louis, F-06500 Menton (FR)
(72) Inventeur: SASSI, Michel, F-06540 Breil-sur-Roya (FR); TALO, Jean-Louis, F-06500 Menton (FR)
(74) Mandataire: Roman, Michel
(86) Numéro de dépôt international: FR9200945
(87) Numéro de publication internationale: WO9307044

(56) Documents cités:
- DE-A- 3 709 482
- DE-U- 8 522 573
- FR-A- 2 440 863

## Description

La présente invention a pour objet un plateau non circulaire pour pédalier, comme précisé dans la première partie de la revendication principale.

Elle concerne principalement l'industrie du cycle mais peut trouver des applications dans d'autres domaines, par exemple celui des appareils d'exercices physiques pour la musculation ou la rééducation, et en général pour tous les appareils utilisant le pédalage et un système de transmission par chaîne ou courroie entre le ou les plateaux du pédalier et un ou plusieurs pignons actionnant le dispositif à entraîner.

Dans les appareils de ce type, le couple résistant se traduisant par la force exercée par la chaîne sur le plateau du pédalier peut être considéré comme sensiblement constant, alors que le couple moteur produit par la personne qui pédale est par nature variable, passant cycliquement par une valeur faible aux points morts haut et bas lorsque les bras des pédales, ou manivelles, sont alignés avec la selle et l'axe du pédalier, et une valeur maximale lorsque lesdits bras sont sensiblement horizontaux.

Pour des raisons évidentes de facilité, on utilise le plus souvent des plateaux circulaires, ce qui entraîne de multiples inconvénients:
- Chocs, stress, variation de vitesse, perte de puissance aux points morts haut et bas et perte de puissance, provoquant une augmentation du rythme cardiaque,
- Effort important de démarrage avec la pédale en haut,
- L'effort de pédalage est fonction du sinus de l'angle du bras de pédale avec l'axe des points morts, et non fonction de la capacité humaine,
- le mouvement de pédalage ne correspond pas à un effort naturel entraînant des disproportions d'effort musculaire, tendinaux, articulaire, limitant la performance ainsi que le plaisir,
- Manque de motricité en cyclisme tous terrains due aux variations de couple moteur,
- Nécessité de monter en régime de rotation élevé pour éviter les surcharges musculaires, ce qui induit des pertes d'énergie dans les effets dynamiques sur les jambes,
- Perte d'énergie dans l'axe du pédalier due à des composantes radiales de l'effort fourni par le cycliste,
- L'accélération n'est pas proportionnelle à l'effort communiqué à la pédale,
- Les muscles, tendons et articulations concernés travaillent d'une manière saccadée et subissent des variations d'effort importantes.

De nombreuses tentatives d'amélioration du fonctionnement du pédalier ont vu le jour. Par exemple, le brevet FR 83 09 015 (FR-A-2 527 542) décrit un plateau de pédalier elliptique dont les plus grands rayons correspondent aux points morts. Ce dispositif recherche avant tout l'obtention d'une vitesse accrue mais, en ne tenant pas compte des caractéristiques musculaires, il entraîne une variation accrue des efforts à fournir et une augmentation de la fatigue, sans pour autant obtenir des résultats probants.

Les brevets DE-A-3 709 482 et DE-U-8 522 573 décrivent également des plateaux non circulaires. Ces derniers peuvent apparaître comme une légère amélioration d'un point de vue énergétique mais, en raison de leur géométrie, ne permettent pas de faire correspondre le couple résistant du pédalier aux possibilités d'efforts musculaires autorisés par les caractéristiques propres à l'anatomie humaine.

Le dispositif selon la présente invention comme précisé dans la revendication principale supprime tous ces inconvenients. En effet, il permet un pédalage plus naturel par l'adaptation, pour chaque position de la pédale, du rayon du plateau de pédalier en fonction des paramètres suivant:
- force musculaire, résistance tendineuse et articulaire,
- géométrie de l'ensemble homme-machine,
- vitesse et accélération du véhicule et du mouvement de pédalage,
- couple nécessaire,
- sensation musculaire,
- type de pédalage recherché.

Il est constitué par un plateau de pédalier permettant de faire augmenter progressivement le couple de pédalage depuis le point mort jusqu'au point où l'extension de la jambe permet de fournir l'effort maximum, grâce à une variation progressive du rayon primitif de la denture entre ces deux points, suivie d'une décroissance rapide jusqu'au point mort suivant. Le principe étant tel que la force à fournir est proportionnelle à la force musculaire que l'utilisateur peut fournir.

Sur les dessins annexés, donnés à titre d'exemple non limitatif d'une des formes de réalisation de l'objet de l'invention:
la figure 1 représente un plateau denté avec pédales au point mort haut, le point de tangence de la partie tendue de la chaîne correspondant sensiblement au plus petit rayon,
et la figure 2 montre le même plateau au point de plus grand effort, le point de tangence correspondant sensiblement au plus grand rayon.

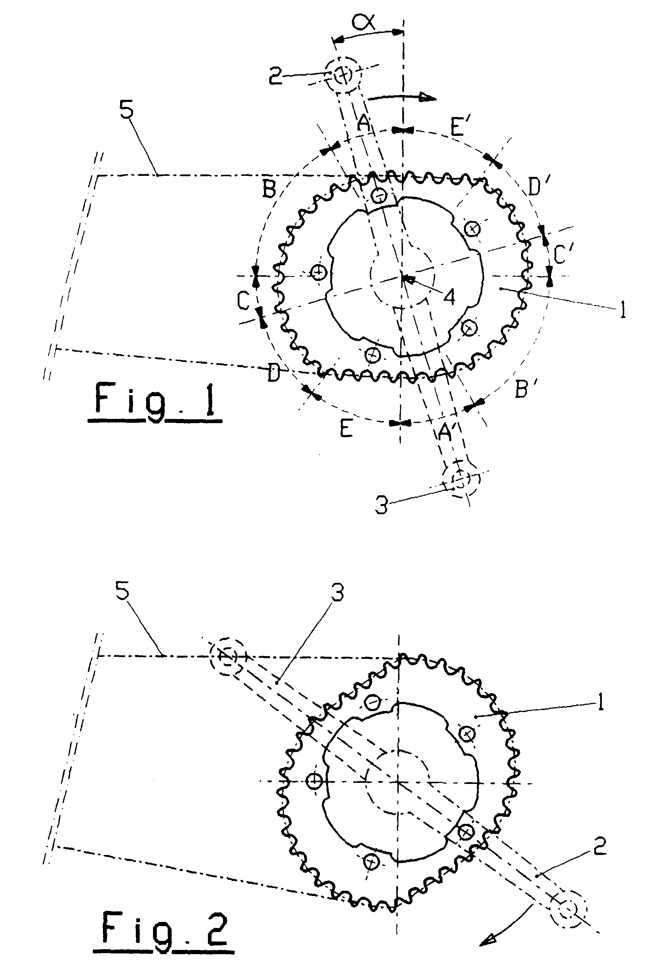

Le dispositif, figures 1 et 2, est constitué d'un plateau denté 1 actionné par deux pédales classiques 2, 3 et entraînant une chaîne 5 également classique.

Si l'on considère la figure 1, la partie gauche du plateau 1 est divisée en plusieurs zones délimitées par des angles mesurés à partir du point où rayon primitif de la denture est le plus faible, dans le sens contraire à la rotation du plateau. Dans le présent exemple, ces angles correpondent au cas d'une bicyclette courante dont la ligne passant par l'axe du pédalier et la selle forme avec la verticale un angle voisin de 17°, et dont la chaîne 5 est sensiblement horizontale. Les valeurs angulaires indiquées peuvent varier en fonction de la construction de la bicyclette.

Ces zones sont les suivantes:
- - Zone A (0° à 30°) -: Passage au point mort haut. Le rayon est le plus faible et très légèrement croissant, la puissance est obtenue par la vitesse de rotation et la force à appliquer est faible. L'attaque progressive élimine tous chocs et ne crée pas de problèmes cardiaques. L'accroissement du rayon est sensiblement égal à 6% pour un plateau denté 1 ayant un rayon maximum 25% plus grand que le rayon minimum.
- - Zone B (30° à 90°) -: Le rayon augmente proportionnellement au sinus de l'angle et à la force musculaire. L'accroissement du rayon est fort. Le plus fort accroissement du rayon est voisin de 17% pour un plateau denté ayant un rayon maximum 25% plus grand que le rayon minimum.
- - Zone C (90° à 107°) -: Le couple de pédalage est très fort, le rayon tend vers le diamètre maximum avec un accroissement d'environ 2%.
- - Zone D (107° à 143°) -: Le couple moteur est fort, la force musculaire continue à augmenter, de plus la bicyclette a atteint une certaine vitesse, le rayon est constant, éventuellement très légèrement croissant ou décroissant, pour certains types de pédalage.
- - Zone E (143° à 180°) -: Le rayon rejoint le plus petit diamètre, son extréêmité décrivant une droite perpendiculaire au plus petit rayon, ou une courbe à très grand rayon, accélérant la rotation du pédalier pour passer plus facilement le point mort en diminuant son temps de passage, ce qui entraîne une motricité plus constante.

On retrouve naturellement sur la partie droite du plateau 1 les mêmes zones, référencées A', B', C', D', E'. La découverte objet de l'invention ayant pour conséquence un plateau délimité par deux courbes similaires successives ayant une symétrie centrale unique par rapport à l'axe 4 du pédalier, et aucune symétrie par rapport à des droites, comme dans le cas des ovales ou des ellipses. Les rayons les plus faibles correspondant aux points morts, et les plus forts aux zones C, D, C', D'.

Les pédales 2, 3 sont fixées sur le plateau 1 de manière à ce que leurs bras forment, avec une droite passant par l'axe de ce dernier et le point de plus faible rayon, un angle de calage α égal à l'angle formé avec le rayon correspondant au point de tangeance du brin tendu de la chaîne 5, par une ligne rejoignant la selle à l'axe du pédalier. Dans les bicyclettes classiques, cet angle est de l'ordre de 14 à 17 degrés. Pour une bicyclette où le cycliste est couché sur le dos ("Velorizontal"), il serait de 70 degrés. Cet angle de calage revêt une grande importance et définit la position des pédales par rapport au plateau denté 1.

La différence entre petit et grand rayon, qui peut varier en fonction du type de pédalage, est comprise entre 18% et 30 %, mais est de préférence sensiblement égale à 25%. Ce paramètre est très important et définit notamment la vitesse maximum de rotation acceptable qui est, pour les bicyclettes usuelles, de 100 tours/minute, ce qui correspond à une différence de rayon équivalent sensiblement à 25%. Les accroissements du rayon dans les zones A, A', B, B', C et C' varient proportionnellement avec la différence entre plus petit et plus grand rayon.

Le pédalier peut comporter plusieurs plateaux selon l'invention, le passage de la chaîne 5 de l'un à l'autre s'effectuant grâce à un dérailleur de type connu. A titre d'exemple, le nombre de dents pour un pédalier de cycle pourra aller de 20 à 58 dents. La chaîne peut toutefois être remplacée par une courroie ou autre moyen similaire entraînée par une roue dont le rayon varie de la même manière que pour le plateau denté décrit ci-avant.

Le plateau 1 pourra être fabriqué en métal, alliage métallique léger ou en résine synthétique ou autre. Son épaisseur sera de l'ordre de 2,5 à 3,5 mm. Des trous dans les parties non fonctionnelles peuvent permettrre d'alléger le système.

Le principe de la présente invention est tel que, considérant le système homme-machine, l'accélération à chaque coup de pédale, la résistance de l'air et une vitesse de pédalage de 0 à 100 tours/minute, la force et l'énergie à fournir au système au cours de la rotation sont proportionnelles à ce que l'homme peut fournir avec sa musculature naturelle en minimisant la musculature de la volition. Ce principe considère également que l'énergie produite par le cycliste doit être utilisée comme énergie motrice avec le minimum de déperdition due à des composantes de force radiale sur les pédales. Enfin, le principe permet l'élimination de chocs, points durs et mous néfastes à l'organisme d'un point de vue articulaire et musculaire avec des conséquences cardio-pulmonaires. La géométrie du pédalier décrit correspond à la courbe de moindre stress.

Le positionnement des divers éléments constitutifs donne à l'objet de l'invention un maximum d'effets utiles qui n'avaient pas été, à ce jour, obtenus par des dispositifs similaires.

## Revendications

1. Plateau non circulaire pour pédalier de bicyclette, destiné en particulier à l'industrie du cycle mais pouvant s'appliquer à tous les appareils utilisant le pédalage et un système de transmission par chaîne ou courroie, par exemple des appareils d'exercices physiques pour la musculation ou la rééducation,
caractérisé par un plateau (1) d'entraînement non circulaire, ne présentant pas de symétrie axiale mais une symétrie centrale unique par rapport à l'axe (4) du pédalier, les pédales (2, 3) étant fixées sur le plateau (1) de manière à ce que leurs bras forment, avec une droite passant par l'axe de ce dernier et le point de plus faible rayon, un angle de calage α égal à l'angle formé par une ligne rejoignant la selle à l'axe du pédalier, avec le rayon correspondant au point de tangence du brin tendu de la chaîne (5) ou de la courroie.

2. Dispositif selon la revendication 1, se caractérisant par le fait que l'angle de calage α est compris entre 14 et 17 de grés.

3. Dispositif selon la revendication 1, se caractérisant par le fait que chaque moitié du plateau (1) comporte 5 zones délimitées par des angles mesurés à partir du point où le rayon est le plus faible, dans le sens contraire à celui de la rotation dudit plateau:
- environ 0° à 30° (zones A, A'): Passage au point mort haut. Le rayon est minimum et très légèrement croissant.
- environ 30° à 90° (zones B, B'): Le rayon augmente proportionnellement au sinus de l'angle et à l'accroissement de la force musculaire
- environ 90° à 107° (zones C, C'): Le rayon tend vers le diamètre maximum.
- environ 107° à 143° (zones D, D'): Le rayon est constant, éventuellement très légèrement croissant ou décroissant.
- environ 143° à 180° (zones E, E'): Le rayon rejoint le plus petit diamètre, son extrémité décrivant une droite perpendiculaire au plus petit rayon ou une courbe à très grand rayon.

4. Dispositif selon l'une quelconque des revendications précédentes, se caractérisant par le fait que la différence entre plus petit et plus grand rayons primitifs du plateau (1) est comprise entre 18 et 30 pour cent.

5. Dispositif selon l'une quelconque des revendications précédentes, se caractérisant par le fait que la différence entre plus petit et plus grand rayons primitifs du plateau (1) est sensiblement égale à 25 pour cent.

6. Dispositif selon les revendications 3 et 5, se caractérisant par le fait que l'accroissement du rayon du plateau (1) est sensiblement égal à 6% dans les zones A et A', cet accroissement augmentant jusqu'à une valeur voisine de 17% dans les zones B et B' et étant de l'ordre de 2% dans les zones C et C', ces accroissements variant proportionnellement avec le pourcentage de différence entre plus petit et plus grand rayon.

7. Dispositif selon l'une quelconque des revendications précédentes, se caractérisant par le fait que le plateau (1) est un plateau denté (1) actionnant une chaîne (5), les rayons considérés étant les rayons primitifs de la denture.

## Patentansprüche

1. Unrunde Scheibe für Fahrrad-Tretkurbel, im besonderen bestimmt für die Fahrradindustrie, die jedoch für alle Geräte mit Pedalbetätigung und einem Kraftübertragungssystem mittels Kette oder Treibriemen, wie z.B. Geräte für physisches Training zur Muskelbildung oder Heilgymnastik angewendet werden kann,
gekennzeichnet durch eine unrunde Antriebsscheibe (1), die keine axiale Symmetrie aber eine einzige zentrale Symmetrie in Bezug auf die Achse (4) der Tretkurbel aufweist, wobei die Pedalen (2, 3) an der Scheibe (1) so befestigt sind, daß ihre Arme mit einer Geraden, die durch die Achse der letzteren und den Punkt mit dem kleinsten Halbmesser geht, einen Stellwinkel α bilden gleich dem durch eine Linie vom Sattel zur Tretkurbel gehenden Achse gebildeten Winkel mit einem dem Tangentenpunkt des gespannten Trums der Kette (5) oder des Treibriemens entsprechenden Halbmesser.

2. Vorrichtung gemäß Anspruch 1, dadurch gekennzeichnet, daß der Stellwinkel α zwischen 14 und 17 Grad beträgt.

3. Vorrichtung gemäß Anspruch 1, dadurch gekennzeichnet, daß jede Hälfte der Scheibe (1) aus 5 Bereichen besteht, begrenzt durch die Winkel, gemessen von dem Punkt, an dem der Halbmesser entgegen der Drehrichtung der besagten Scheibe am geringsten ist:
- ca. 0° bis 30° (Bereiche A, A'): Passage des oberen Totpunktes. Der Halbmesser ist am geringsten und sehr leicht ansteigend.
- ca. 30° bis 90° (Bereiche B, B'): der Halbmesser erhöht sich proportional zum Sinus des Winkels und zur Steigerung der Muskelkraft.
- ca. 90° bis 107° (Bereiche C, C'): der Halbmesser erstreckt sich zum maximalen Durchmesser.
- ca. 107° bis 143° (Bereiche D, D'): der Halbmesser ist konstant, eventuell leicht ansteigend oder abfallend.
- ca. 143° bis 180° (Bereiche E, E'), der Halbmesser stößt auf den kleinsten Durchmesser, sein Ende beschreibt eine Gerade senkrecht zum kleinsten Halbmesser oder eine Kurve mit sehr großem Halbmesser.

4. Vorrichtung gemäß irgendeinem der vorstehenden Ansprüche, dadurch gekennzeichnet, daß der Unterschied zwischen den ursprünglichen kleinsten und größten Halbmessern der Scheibe (1) zwischen 18 und 30 Prozent liegt.

5. Vorrichtung gemäß irgendeinem der vorstehenden Ansprüche, dadurch gekennzeichnet, daß der Unterschied zwischen den ursprünglichen kleinsten und größten Halbmessern der Scheibe (1) im wesentlichen gleich 25 Prozent entspricht.

6. Vorrichtung gemäß den Ansprüchen 3 und 5, dadurch gekennzeichnet, daß die Erhöhung des Halbmessers der Scheibe (1) im wesentlichen gleich 6 % in den Bereichen A und A' ist, diese Erhöhung bis zu einem Wert von nahe 17 % in den Bereichen B und B' ansteigt und in der Größenordnung von 2 % in den Bereichen C und C' liegt, wobei diese Erhöhungen proportional mit dem Prozentsatz des Unterschieds zwischen dem kleinsten und dem größten Halbmesser variieren.

7. Vorrichtung gemäß irgendeinem der vorstehenden Ansprüche, dadurch gekennzeichnet, daß die Scheibe (1) eine gezahnte Scheibe (1) ist, welche eine Kette (5) betätigt, und die betrachteten Halbmesser die ursprünglichen Halbmesser der Zahnung sind.

## Claims

1. Non-circular gear wheel for bicycle pedal-operated drive systems, principally designed for the bicycle industry, but with applications to all equipment using chain or belt-operated pedal and transmission systems, for instance, exercise bikes used for muscular development and physiotherapy,
characterized in that a non-circular drive gear wheel (1) does not offer axial symmetry but rather single central symmetry relative to the axis (4) of the pedal system, the pedals (2, 3) being fixed on the gear wheel (1) so that their lever arms form, with a right angle passing through the axis of the latter and at point of smallest radius, a setting angle α at the angle formed by a line joining the saddle to the axis of the pedal system, with a radius corresponding to the tangent point of tightened chain link (5) or belt radius.

2. Device as per claim 1 characterized in that the setting angle α is between 14 and 17 degrees.

3. Device as per claim 1, characterized in that each half of the gear wheel (1) has 5 zones defined by angles measured from a point where the radius is smallest in the opposite direction to the direction of rotation of the said gear wheel:
- around 0° to 30° (zones A, A'): at the top dead centre. The radius is at its lowest and very slightly rising.
- around 30° to 90° (zones B, B'): the radius increases proportionally to the sinus of the angle and to the increase in muscular power.
- around 90° to 107° (zones C, C'): the radius tends towards the maximum diameter.
- around 107° to 143° (zones D, D'): the radius is constant, if necessary very slightly increasing or decreasing.
- around 143° to 180° (zones E, E'): the radius joins the smallest diameter, its end forming a line perpendicular to the smallest radius or a very large radius curve.

4. Device according to any one of the aforesaid claims, characterized in that the difference between the smallest and the largest gear wheel geometrical radius (1) is between 18 to 30 per cent.

5. Device as per any one of the aforesaid claims characterized in that the difference between the smallest and largest geometrical radii of the gear wheel (1) is roughly equal to 25 per cent.

6. Device as per claims 3 and 5, characterized in that the increase in the radius of the gear wheel (1) is roughly equal to 6% in zones A and A', this increase rising up to a value close to 17% in zones B and B' and being around 2% in zones C and C', these increases varying proportionally with the percentage of difference between smallest and largest radius.

7. Device as per any one of the aforesaid claims characterized in that the gear wheel (1) is a toothed gear wheel (1) driving a chain (5), the radii considered being the geometrical radii of the toothing.
